# EUROPEAN PATENT APPLICATION

(11) **EP 4 485 840 A1**
(43) Date of publication of application: **01.01.2025**
(21) Application number: 23217507.5
(22) Date of filing: 18.12.2023
(51) Int. Cl.: H04L 9/00, H04L 9/40, G06F 21/55

(54) **APPARATUS, DEVICE, METHOD, AND NON-TRANSITORY MACHINE-READABLE STORAGE MEDIUM FOR A NODE OF A BLOCKCHAIN NETWORK**

(30) Priority: 30.06.2023 US 202318344882
(71) Applicant: INTEL Corporation, Santa Clara, CA 95054 (US)
(72) Inventor: DIVAN KOLLER, Mario Jose, Hillsboro, 97124-5142 (US); CARRANZA, Marcos, Portland, 97229 (US); POORNACHANDRAN, Rajesh, PORTLAND, 97229 (US); GUIM BERNAT, Francesc, 08036 Barcelona (ES); MARTINEZ-SPESSOT, Cesar, Hillsboro, 97123 (US)
(74) Representative: 2SPL Patentanwälte PartG mbB

(57) **Abstract**

Various examples relate to an apparatus, device, method, and a non-transitory machine-readable storage medium for a node of a blockchain network. The apparatus comprises interface circuitry, machine-readable instructions and processor circuitry to execute the machine-readable instructions to compare a traffic pattern of requests associated with one or more smart contracts hosted by the node of the blockchain network with a reference traffic pattern, determine an estimated denial of service of at least one of the one or more smart contracts based on the comparison between the traffic pattern and the reference traffic pattern, determine one or more potential mitigations for the estimated denial of service, and apply at least one of the one or more potential mitigations.

## Description

### Background

The term Web3 refers to an architecture for a third generation of the internet, which is a decentralized, open-source, blockchain-based version of the web that enables peer-to-peer interactions without the need for intermediaries. Web3 aims to create a more secure, transparent, and decentralized internet where users can fully own and control their data without the need for centralized authorities or third-party platforms. Web3 is based on several technologies, such as blockchain networks, smart contracts, and decentralized applications (dApps).

Detecting coordinated and distributed attacks (e.g., Distributed Denial of Service - DDoS) in heterogeneous Web3 environments like edge computing is challenging, because requests may come from multiple sources (and may therefore not be detectable as denial of service). This is a challenge in distributed systems that provide a service on edge. Such services may be based on rules that govern service provision, responsibilities, and scope through a Service Level Agreement (SLA). System components may be distributed and coordinated with each other, fostering a communication economy.

Many popular blockchain networks partially address the challenge of DDoS attacks by requiring transaction fees (e.g., gas in some networks). However, this approach might not suffice for handling Denial of Service attacks. Moreover, this challenge might not be addressed in layer 2 networks (which may be less well-protected as they require mechanisms like a custom consensus mechanisms), or private blockchain networks.

### Brief description of the Figures

Some examples of apparatuses and/or methods will be described in the following by way of example only, and with reference to the accompanying figures, in which:
- Fig. 1a: shows a schematic diagram of an example of an apparatus or device for a node of a blockchain network, and of a node comprising such an apparatus or device;
- Fig. 1b: shows a flow chart of an example of a method for a node of a blockchain network;
- Fig. 2: shows a schematic diagram of an example of a proposed architecture; and
- Fig. 3: shows a schematic diagram of an operational flow.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

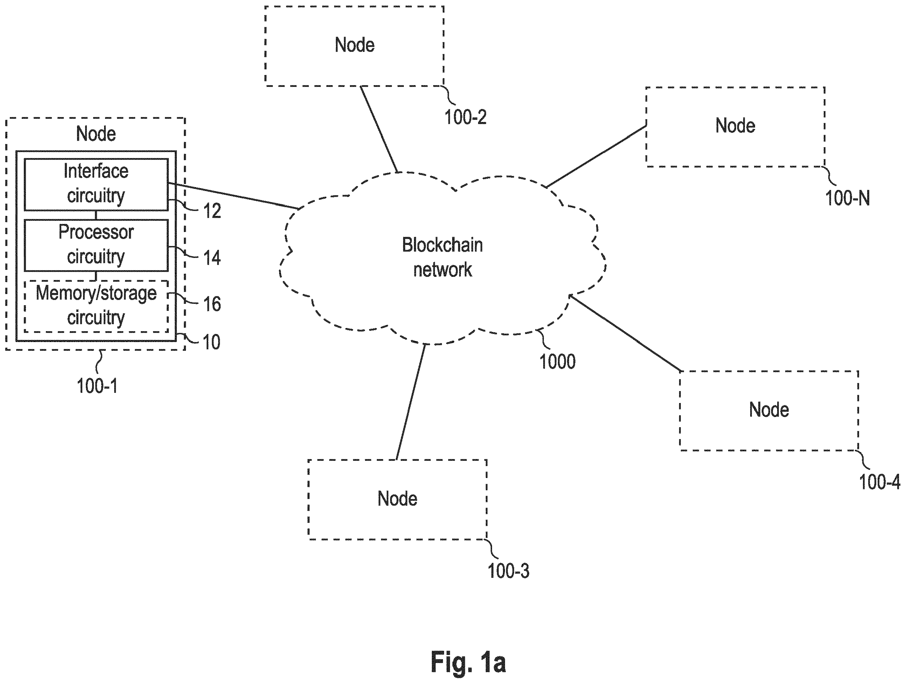

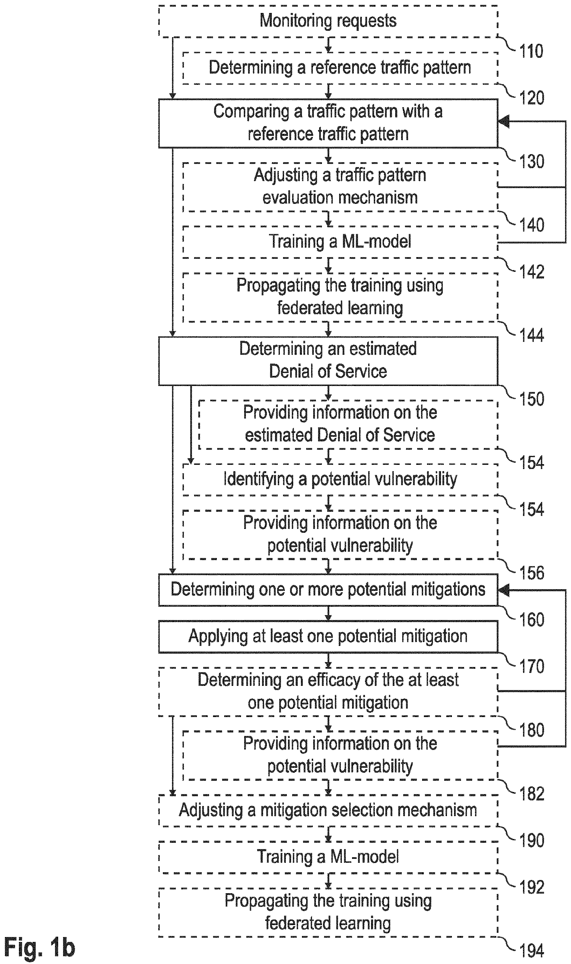

Fig. 1a shows a schematic diagram of an example of an apparatus 10 or device 10 for a node 100 (e.g., 100-1, 100-2, ..., 100-N) of a blockchain network 1000. The apparatus 10 comprises circuitry to provide the functionality of the apparatus 10. For example, the circuitry of the apparatus 10 may be configured to provide the functionality of the apparatus 10. For example, the apparatus 10 of Fig. 1a comprises interface circuitry 12, processor circuitry 14, (optional) memory/storage circuitry 16. For example, the processor circuitry 14 may be coupled with the interface circuitry 12, with the memory/storage circuitry 16. For example, the processor circuitry 14 may provide the functionality of the apparatus, in conjunction with the interface circuitry 12 (for communicating with other nodes of the blockchain network or with other components of a node 100 comprising the apparatus 10), and the memory/storage circuitry 16 (for storing information, such as machine-readable instructions). Likewise, the device 10 may comprise means for providing the functionality of the device 10. For example, the means may be configured to provide the functionality of the device 10. The components of the device 10 are defined as component means, which may correspond to, or implemented by, the respective structural components of the apparatus 10. For example, the device 10 of Fig. 1b comprises means for processing 14, which may correspond to or be implemented by the processor circuitry 14, means for communicating 12, which may correspond to or be implemented by the interface circuitry 12, (optional) means for storing information 16, which may correspond to or be implemented by the memory or storage circuitry 16. In general, the functionality of the processor circuitry 14 or means for processing 14 may be implemented by the processor circuitry 14 or means for processing 14 executing machine-readable instructions. Accordingly, any feature ascribed to the processor circuitry 14 or means for processing 14 may be defined by one or more instructions of a plurality of machine-readable instructions. The apparatus 10 or device 10 may comprise the machine-readable instructions, e.g., within the memory or storage circuitry 16 or means for storing information 16.

The processor circuitry 14 or means for processing 14 is to compare a traffic pattern of requests associated with one or more smart contracts hosted by the node of the blockchain network with a reference traffic pattern. The processor circuitry 14 or means for processing 14 is to determine an estimated denial of service of at least one of the one or more smart contracts based on the comparison between the traffic pattern and the reference traffic pattern,. The processor circuitry 14 or means for processing 14 is to determine one or more potential mitigations for the estimated denial of service based on a collection of mitigations collectively maintained by the nodes of the blockchain network. The processor circuitry 14 or means for processing 14 is to apply at least one of the one or more potential mitigations.

Fig. 1a further shows at least one node 100-1 (100-2,..., 100-N) comprising the apparatus 10 or device 10. For example, the node 100-1 may be a computer system, e.g., a computer system being configured to participate in the blockchain network 1000. Fig. 1a further shows a system comprising a plurality of nodes 100-1, ..., 100-N of the blockchain network 1000.

Fig. 1b shows a flow chart of an example of a corresponding method for a node of a blockchain network, e.g., for at least one of the node 100 (100-1, ..., 100-N) shown in Fig. 1a. The method comprises comparing 130 a traffic pattern of requests associated with one or more smart contracts hosted by the node of the blockchain network with a reference traffic pattern. The method comprises determining 150 an estimated denial of service of at least one of the one or more smart contracts based on the comparison between the traffic pattern and the reference traffic pattern. The method comprises determining 160 one or more potential mitigations for the estimated denial of service based on a collection of mitigations collectively maintained by the nodes of the blockchain network. The method comprises applying 170 at least one of the one or more potential mitigations. For example, the method may be performed by a node 100 (100-1, ..., 100-N) of the blockchain network 1000, e.g., by an apparatus 10 or device 10 included in such a node.

In the following, further details with respect to the apparatus 10, the device 10, the node 100 (100-1,..., 100-N), the method, and a corresponding computer program will be introduced with reference to the apparatus 10 and the node 100. Features introduced with reference to the apparatus 10 and/or node 100 may likewise be included in the corresponding device 10, method and computer program.

Various examples of the present disclosure relate to the mitigation of denial of service (DoS) attacks, and in particular Distributed Denial of Service (DDoS) attacks on smart contracts hosted on a blockchain network. A smart contract is a self-executing contract that is coded on a blockchain platform, such as Ethereum. In essence, it is a computer program that is stored on the blockchain and executed by a node of the blockchain hosting the smart contract, and that can be used via an application programming interface (API). In many cases, smart contracts are programs that automatically enforces the rules and regulations of an agreement between two parties based on the terms of the contract. Smart contracts are designed to be secure, transparent, and immutable, meaning they cannot be tampered with after they have been deployed. They are often used to facilitate the exchange of digital assets, such as cryptocurrencies, or to regulate the transfer of ownership of physical assets.

However, since smart contracts are computer programs that are publicly accessible via their API, they provide a potential attack surface for attackers, e.g., attackers wanting to compromise a node of a blockchain network. For example, by repeatedly calling a function via the API of the smart contract, computational load is generated on the node executing the smart contract, which may impede other workloads of that node, and may even cause the node to fall behind the other nodes of the distributed ledger implemented by the blockchain. Moreover, in extreme cases, high workloads may crash nodes or smart contracts, with the resulting memory corruption providing another attack surface. Therefore, Denial of Service attacks run by attackers trying to compromise a node may be of concern for nodes of a blockchain network.

However, blockchains are often used to host a wide variety of smart contracts, the behavior of which is generally not known. While the vast majority of smart contracts, e.g., regarding transfer of ownership of a digital asset, are created from popular templates, there can be no assumption that all of the smart contracts being hosted on a blockchain are known or derived from such templates. As a result, the mitigation of DoS (e.g., DDoS) attacks is harder than, for example, for web servers, which only host one type of service with known properties.

In the present disclosure, the mitigation of DoS attacks is centered around traffic patterns of individual smart contracts. In the proposed concept, a traffic pattern of requests associated with one or more smart contracts hosted by the node of the blockchain network is compared with/to a reference traffic pattern. This traffic pattern relates to traffic associated with the at least one smart contract - e.g., both incoming traffic and outgoing traffic (as calling an API of the smart contract may result in the smart contract making an outgoing request to another web server or smart contract). Accordingly, the traffic pattern (and reference traffic pattern) may relate to at least one of incoming requests and outgoing requests (e.g., incoming requests obtained via the API if the smart contract, and outgoing requests/responses issued by the smart contract). For example, the traffic pattern may be an abstraction of the traffic, and may, for example, represent one or more items of a number of overall requests, a number of incoming requests, a number of incoming requests per API endpoint, a number of outgoing request, a time-pattern of requests (e.g., requests coming in regular or random intervals vs. requests coming all at once).

To establish a baseline, the individual nodes may monitor how "normal" traffic of the respective smart contract(s) looks. For example, the reference traffic pattern may be a reference traffic pattern that may be determined locally at the node. This can be done by monitoring the incoming and/or outgoing traffic of the at least one smart contract over time and determining the reference pattern based on the monitored traffic. In other words, the processor circuitry may monitor requests associated with the one or more smart contracts, and to determine the reference traffic pattern based on the monitored requests. Accordingly, as further shown in Fig. 1b, the method may comprise monitoring 110 requests associated with the one or more smart contracts and determining 120 the reference traffic pattern based on the monitored requests. The monitoring of incoming requests may be done using a reverse proxy being placed between a requester and the at least one smart contract, and the monitoring of outgoing requests may be done using a proxy being placed between the smart contract and any other entity the requests are transmitted to. Alternatively, packet sniffing may be used to monitor the requests, or a framework being used to host the smart contract may log the activity of the smart contract, which may also be used to monitor the requests. Finally, in some cases, all of the requests may be logged via the blockchain, which may also be used to monitor the requests.

In addition, or as an alternative to the use of monitoring of the requests for determining the reference traffic pattern, monitoring of the requests may also be used as a precursor to compare the traffic pattern to the reference traffic pattern, e.g., by first determining the traffic pattern based on the monitored requests, and then comparing the traffic pattern with the reference traffic pattern.

In some cases, in addition, or as alternative, to the local determination of the reference traffic pattern, the reference traffic pattern may be a reference traffic pattern that is collectively maintained by the nodes of the blockchain network. For example, the processing circuitry may provide the locally determined reference traffic pattern of a smart contract to the other nodes, e.g., via the blockchain, or the processing circuitry may adjust the collectively maintained reference traffic pattern using the monitoring of the request and provide the adjusted reference traffic pattern to the other nodes via the blockchain.

In the proposed concept, the traffic pattern is compared with/to the reference traffic pattern. This may be done using a traffic pattern evaluation mechanism. In other words, the comparison between the traffic pattern and the reference traffic pattern may be performed using a traffic pattern evaluation mechanism. This traffic pattern evaluation mechanism may be collectively maintained by the nodes of the blockchain network.

In a simple implementation, the traffic pattern evaluation mechanism may be based on one or more thresholds, e.g., one or more thresholds defining a maximally allowed different between the reference traffic pattern and the traffic pattern being compared with the reference traffic pattern. For example, the traffic pattern evaluation mechanism may define a threshold for each item of the (reference) traffic pattern. A denial of service may be determined if the threshold of at least a pre-defined number of the items is violated.

In another implementation, the traffic pattern evaluation mechanism may be machine-learning based. For example, the traffic pattern evaluation mechanism may be implemented by a machine-learning model, e.g., a classification machine-learning model that outputs a classification ("denial of service", "no denial of service", or "denial of service", "no denial of service", "unsure") or a regression machine-learning model that outputs a numerical value representing a likelihood of a denial-of-service attack occurring (e.g., a likelihood of 0.12 of the current traffic pattern indicating a denial of service attack.

During operation of the smart contract, there are often spikes of usage that could be either malicious, i.e., a denial of service, or just a random spike. These random spikes are hard to distinguish from denial-of-service attacks, and may require a learning approach to handle, by continuously evolving the traffic pattern evaluation mechanism. In other words, the processor circuitry may adjust the traffic pattern evaluation mechanism over time based on a plurality comparisons between the traffic pattern and the reference traffic pattern at a plurality of points of time. Accordingly, as further shown in Fig. 1b, the method may comprise adjusting 140 the traffic pattern evaluation mechanism over time based on a plurality comparisons between the traffic pattern and the reference traffic pattern at a plurality of points of time. This may be done based on the determination of the estimated denial of service. In general, a denial of service has an impact of a performance of the node. If the performance impact resulting from a traffic pattern, even if the traffic pattern is determined to be a denial of service according to the traffic pattern evaluation mechanism, is low enough or negligible (e.g., if a Service Level Agreement, SLA, of the node is not violated), this traffic pattern may, in retrospect, be considered to not be indicative of a denial of service. Accordingly, the prior comparison (of the plurality of comparisons between the traffic pattern and the reference traffic pattern at a plurality of points of time) may be re-examined, and used to adjust the traffic pattern evaluation mechanism, e.g., by retraining the machine-learning model, or by adapting one or several thresholds.

As outlined above, in some implementations, the traffic pattern evaluation mechanism may be based on a machine-learning model, such as a classifier. If the traffic pattern evaluation mechanism is adapted, this can be done by retraining the machine-learning model. In other words, the processor circuitry may adjust the traffic pattern evaluation mechanism by training a machine-learning model used by the traffic pattern evaluation mechanism. Accordingly, as further shown in Fig. 1b, the method may comprise adjusting 140 the traffic pattern evaluation mechanism by training 142 a machine-learning model used by the traffic pattern evaluation mechanism.

To illustrate both the usage of the machine-learning model as part of the traffic pattern evaluation mechanism and the training of the machine-learning model, a short introduction to machine learning is given. Machine learning refers to algorithms and statistical models that computer systems may use to perform a specific task without using explicit instructions, instead relying on models and inference. For example, in machine-learning, instead of a rulebased transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g., a classification algorithm, a regression algorithm or a similarity learning algorithm. Classification algorithms may be used when the outputs are restricted to a limited set of values, i.e., the input is classified to one of the limited set of values. Regression algorithms may be used when the outputs may have any numerical value (within a range). Similarity learning algorithms are similar to both classification and regression algorithms but are based on learning from examples using a similarity function that measures how similar or related two objects are.

In the present case, the machine-learning model used as part of the traffic pattern evaluation mechanism may be implemented as a classifier or as a regressor, i.e., to output a classification of the traffic pattern ("denial of service", "no denial of service", or "denial of service", "no denial of service", "unsure") or a numerical value representing the likelihood of a denial of service occurring. Both types of machine-learning models are trained using supervised learning. As outlined above, in supervised learning, the machine-learning model is trained by defining training input samples (i.e., the traffic pattern, and optionally the reference traffic pattern) and a desired output (e.g., a classification result, or a likelihood that the traffic pattern indicates a denial of service) and adjusting the machine-learning model so that the machine-learning model learns to provide a transformation between the training input samples and the desired output. In some examples, the reference traffic pattern is used as additional input, or the reference traffic pattern may be included implicitly in the machine-learning model, as the machine-learning model represents the reference traffic pattern.

In various examples, other nodes would also benefit from adjustments to the traffic pattern evaluation mechanism. Therefore, the adjusted traffic pattern evaluation mechanism may be shared with other nodes of the blockchain network. In the case of the traffic pattern evaluation mechanism being based on thresholds, the updated threshold(s) may be shared with the other nodes. In the case of the traffic pattern evaluation mechanism being based on a machine-learning model, the adjustments to the machine-learning model may be shared using a technique called federated learning (or similar techniques). In other words, the processor circuitry may propagate the training of the machine-learning model to one or more further nodes of the blockchain network using federated learning. Accordingly, as further shown in Fig. 1b, the method may comprise propagating 144 the training of the machine-learning model to one or more further nodes of the blockchain network using federated learning.

Federated learning is a machine learning technique that involves training models on decentralized data sources without exchanging the data itself. Instead of sending the data to a central server, the data remains on the respective devices, i.e., the nodes of the blockchain model. The model is sent to the node where it is trained on the node's data, and the updated model parameters are sent back to a central server, or, in the present case, shared via the blockchain. This process happens across multiple devices, allowing the model to learn from a diverse set of users' experiences. Before training the machine-learning model, the most current version may be obtained from the central server, or, in this case, blockchain, and trained using the new data on the respective node.

The processor circuitry determines the estimated denial of service of at least one of the one or more smart contracts based on the comparison between the traffic pattern and the reference traffic pattern, e.g., based on the traffic pattern evaluation mechanism. Information on the denial-of-service attack may then be shared with other nodes, e.g., so the nodes can apply mitigations as well. In other words, the processor circuitry may provide information on the estimated denial of service to at least one other node of the blockchain network. Accordingly, as further shown in Fig. 1b, the method may comprise providing 152, 156 information on the estimated denial of service to at least one other node of the blockchain network.

In some cases, it may be possible to pin-point the mechanism behind the denial-of-service attack. For example, if a smart contract exhibits a faulty behavior that causes a massive use of computational resources for manipulated or nonsensical requests, or if a smart contract can be used to amplify an attack (e.g., by causing a large number of outgoing requests per incoming request), this behavior can be detected based on the traffic pattern and/or by determining the performance impact of the traffic pattern. Such information may be used to conclude that a smart contract has a potential vulnerability, which may be shared with the other nodes. For example, the processor circuitry may identify a potential vulnerability associated with the estimated denial of service (e.g., based on the traffic pattern and/or the performance impact of the traffic pattern) and to provide information on the potential vulnerability to at least one other node of the blockchain network. Accordingly, as further shown in Fig. 1b, the method may comprise identifying 154 a potential vulnerability associated with the estimated denial of service and providing 156 information on the potential vulnerability to at least one other node of the blockchain network.

After determining occurrence of a denial-of-service attack, the node seeks to mitigate the attack. For this purpose, the node selects one or more potential mitigations for the estimated denial of service, for example based on a collection of mitigations collectively maintained by the nodes of the blockchain network. For example, a mitigation may include blocking of incoming requests for a specific API endpoint, blocking of incoming requests of a specific host, internet protocol address or internet protocol address range, delaying or throttling of requests for a specific API endpoint, delaying or throttling of incoming requests of a specific host, internet protocol address or internet protocol address range etc. The collection of mitigations may be stored in a database that is hosted on the blockchain. For example, the processor circuitry may select the or more potential mitigations based on the smart contract (e.g., based on a known template of the smart contract, or an identity of the smart contract), and/or based on the traffic pattern. For example, the processor circuitry may query the database based on the smart contract and/or based on the traffic pattern. In more general terms, a selection of the one or more potential mitigations may be performed using a mitigation selection mechanism, which may be based on the smart contracts and/or based on the traffic pattern. Similar to the traffic pattern evaluation mechanism, this mechanism may be maintained collectively by the nodes of the blockchain network. In other words, the mitigation selection mechanism may be collectively maintained by the nodes of the blockchain network. Moreover, not only the selection mechanism, but also the actual mitigations are collectively maintained by the nodes of the blockchain network. To avoid manipulation, this collectivelymaintained collection may be maintained using a consensus mechanism, so that individual nodes cannot manipulate the collection in a way that would expose the other nodes to denial-of-service attacks. In other words, the processor circuitry may determine the one or more potential mitigations based on a collection of mitigations collectively maintained, using a consensus-based administration scheme, by the nodes of the blockchain network.

At least one of the one or more mitigations is then applied by the node. In some cases, applying one of the mitigations may suffice if the mitigation is suitable for remedying the denial-of-service attack. However, in many cases, the node may have to try different mitigations or vary one of the determined mitigations until the denial-of-service attack is remedied. To determine whether a mitigation is effective, the efficacy of the mitigations may be measured and used to improve the selection process. In other words, the processor circuitry may determine an efficacy of the at least one applied mitigation (e.g., based on a change in performance, traffic pattern and/or ability of the node to fulfill the SLA). Accordingly, as further shown in Fig. 1b, the method may comprise determining 180 an efficacy of the at least one applied mitigation. To improve the mitigation selection across all nodes of the blockchain network, the data gained by determining the efficacy may be shared with other nodes, so that the other nodes can adjust their mitigation selection accordingly. In other words, the processor circuitry may provide information on the efficacy of the at least one potential mitigation to at least one other node of the blockchain network. Accordingly, as further shown in Fig. 1b, the method may comprise providing 182 information on the efficacy of the at least one potential mitigation to at least one other node of the blockchain network. The information on the efficacy may indicate, whether a mitigation of the collection of mitigations is successful at containing/remedying an ongoing denial-of-service attack. Additionally, or alternatively, if the node has varied a mitigation, the information on the efficacy may indicate a variation of a mitigation of the collection of mitigations that is successful at containing/remedying an ongoing denial-of-service attack.

The determined efficacy may be used, locally at the node, for various purposes. For example, the determine efficacy may be used to determine, whether a mitigation currently being applied is successful at containing/remedying an ongoing denial-of-service attack, and. if not, whether another mitigation is to be applied or whether the mitigation currently being applied is to be varied. In addition, or as an alternative, the determined efficacy may be used to improve the selection process. For example, the processor circuitry may adjust the mitigation selection mechanism over time based on the determined efficacy. Accordingly, as further shown in Fig. 1b, the method may comprise adjusting 190 the mitigation selection mechanism over time based on the determined efficacy. This may include providing additional information for the database, to indicate that a particular mitigation (or variation thereof) has been successful or unsuccessful at containing/remedying a particular denial-of-service attack. Additionally, or alternatively, in some cases, e.g., if the mitigation selection mechanism is based on a machine-learning model for selecting the one or more mitigations, the machine-learning model may be retrained to adjust the mitigation selection mechanism.

As outlined above, the mitigation selection mechanism selects a mitigation based on the available information, e.g., the traffic pattern and the smart contract involved. Accordingly, the machine-learning model may be trained to output a selection of one or more mitigations (or a variation of one of the mitigations) when the traffic pattern (and optionally an identifier or properties of the smart contract) are input into the machine-learning model. Such a selection may be implemented as a classifier or regressor that is trained to output, for each mitigation of the collection of mitigations, whether the mitigation is likely to be successful at containing or remedying the denial-of-service attack. Similar to the examples outlined above, supervised learning may be used to train the machine-learning model in this case, with the traffic patterns (and optionally identifiers or properties of the smart contracts) being used as training input and a classification or numerical value representing the suitability of the respective mitigation being used as desired output.

Alternatively, the machine-learning model may be trained to output the selection directly. For example, this can be done by training the machine-learning model using reinforcement learning. Reinforcement learning is another of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards). In the present case, the action may be selection of the one or more mitigations and/or variation of an existing mitigation, while the reward may be calculated based on whether the respective mitigation is successful at containing or remedying the denial of service.

Regardless of which of the above approaches is chosen, the result of the training may be trained with the other nodes. For example, the processor circuitry may adjust the mitigation selection mechanism by training a machine-learning model used by the mitigation selection mechanism, and to propagate the training of the machine-learning model to one or more further nodes of the blockchain network using federated learning. Accordingly, as further shown in Fig. 1b, the method may comprise adjusting 190 the mitigation selection mechanism by training 192 a machine-learning model used by the mitigation selection mechanism and propagating 194 the training of the machine-learning model to one or more further nodes of the blockchain network using federated learning.

In summary, in the proposed concept, at least one mitigation is applied. The node may propose variations to the original mitigation recipe based on online AI (Artificial Intelligence) models, such as the above-reference machine-learning model used by the mitigation selection mechanism. The efficacy in containing the attack may be measured per applied variation, and may be used for various purposes, such as sharing with other nodes or improving the selection process.

One major motivation behind blockchain networks are the mechanisms that allow nodes by different parties to cooperate without having to trust each other, as trust is established via the transparency provided by the blockchain. In the present disclosure, various mechanisms, mitigations etc. are shared and managed collectively inside the blockchain network. To avoid subversion by malicious actors, measures may be taken to ensure that the information shared is not compromised. This can be done by using a reputation-based mechanism, in which changes to the shared information are approved based on the reputation of the respective nodes proposing the changes, e.g., a reputation that is earned over time based on the quality of the changes proposed by the respective nodes. For example, at least one of a collective maintenance of the collection of mitigations, a collective maintenance of a traffic pattern evaluation mechanism and a collective maintenance of a mitigation selection mechanism may be based on a reputation-based mechanism that may be based on a reputation of the nodes of the blockchain network.

To perform the administrative communication between the nodes, e.g., to share information on potential vulnerabilities, mitigation selection techniques, variations of existing mechanisms etc., a gossip protocol may be used. For example, the processor circuitry may share at least one of information on an efficacy of the at least one potential mitigation, information on a potential vulnerability and information on the estimated denial of service to at least one other node of the blockchain network using a gossip protocol. A gossip protocol is a decentralized communication protocol that is used to disseminate information across a network of nodes. Such a gossip protocol can be used to distribute data and transactions across the network, allowing for all nodes to have the most up-to-date information about the state of the blockchain. In a gossip protocol, nodes communicate with each other by randomly selecting other nodes to transmit information to. Each node that receives the information then propagates it to its own randomly selected nodes in the network, until the information has been disseminated to all nodes in the network.

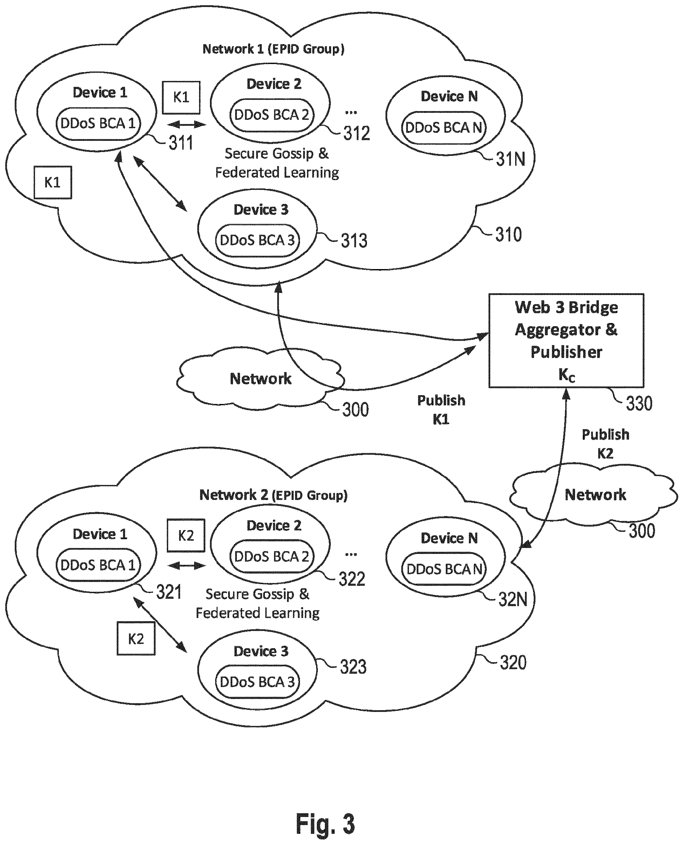

In the proposed concept, various information is shared among nodes of a blockchain network that is related to the detection and mitigation of denial-of-service attack. While such information can be shared among the nodes via the blockchain on which the smart contracts are hosted (such as Ethereum, a trademark of Stiftung Ethereum/Ethereum Foundation or Solana, a trademark of Solana Foundation), this may lead to a large amount of noise on the blockchain, and may, for example, incur gas fees. Therefore, in some examples, this activity may be moved to a Layer 2 blockchain, that may be specific to a group of nodes of the blockchain network. In other words, the smart contract may be hosted on a Layer 1 blockchain, such as Ethereum or Solana, communication among the nodes regarding detection and mitigation of denial-of-service attacks may be conducted via a separate Layer 2 blockchain, which may be private to the group of nodes. Such an approach is shown in Fig. 3, for example, where the nodes are organized in groups 310; 320, and communication among the nodes regarding detection and mitigation of denial-of-service attacks is shared among the nodes of the group. This information may be shared with other groups via bridges, such as bridge 330 shown in Fig. 3.

Machine-learning algorithms are usually based on a machine-learning model. In other words, the term "machine-learning algorithm" may denote a set of instructions that may be used to create, train, or use a machine-learning model. The term "machine-learning model" may denote a data structure and/or set of rules that represents the learned knowledge, e.g., based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (nonlinear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input. In at least some embodiments, the machine-learning model may be deep neural network, e.g., a neural network comprising one or more layers of hidden nodes (i.e., hidden layers), preferably a plurality of layers of hidden nodes.

Alternatively, the machine-learning model may be a support vector machine. Support vector machines (i.e., support vector networks) are supervised learning models with associated learning algorithms that may be used to analyze data, e.g., in classification or regression analysis. Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The interface circuitry 12 or means for communicating 12 may correspond to one or more inputs and/or outputs for receiving and/or transmitting information, which may be in digital (bit) values according to a specified code, within a module, between modules or between modules of different entities. For example, the interface circuitry 12 or means for communicating 12 may comprise circuitry configured to receive and/or transmit information.

For example, the processor circuitry 14 or means for processing 14 may be implemented using one or more processing units, one or more processing devices, any means for processing, such as a processor, a computer or a programmable hardware component being operable with accordingly adapted software. In other words, the described function of the processor circuitry 14 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 16 or means for storing information 16 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

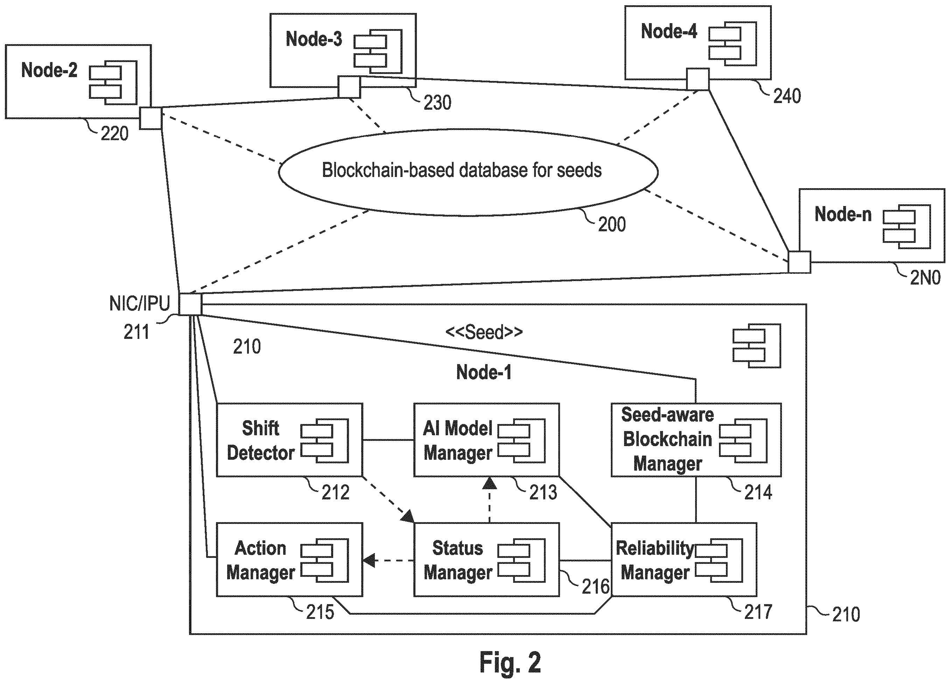

More details and aspects of the apparatus 10, device 10, method, computer program, node 100 and blockchain network 1000 are mentioned in connection with the proposed concept, or one or more examples described above or below (e.g., Fig. 2 to 3). The apparatus 10, device 10, method, computer program, node 100 and blockchain network 1000may comprise one or more additional optional features corresponding to one or more aspects of the proposed concept, or one or more examples described above or below.

Various examples of the present disclosure relate to an adaptive mechanism to detect distributed attacks on web3 networks. Various examples of the present disclosure relate to the so-called Web3 and/or to security.

Various examples of the present disclosure incorporate a data shift detector that is based on federated learning to learn iteratively from (every) system component condition and converge to detect a DDoS attack and identify the affected regions across heterogenous Web3 Edge nodes. Detectors may identify abrupt changes/spikes in transmitted/received data caused by smart contracts API (Application Programming Interface) calls. System components may exchange parameters (model weights) and learn from each other (e.g., using federated learning), preserving data ownership and sovereignty. This may involve AI-based Distributed Data Shift Detectors for monitoring Service Level Agreements (SLA).

Every individual node may share mitigating techniques measuring whether it works based on the current state locally. This information may be shared among nodes jointly with the node status to provide a measure of node reputation and technique efficacy. When a node detects a possible DDoS, it may use a gossip protocol to share potential vulnerabilities and how to mitigate them before all nodes get impacted.

Fig. 2 shows a schematic diagram of an example of a proposed architecture. Fig. 2 shows five nodes 210; 220; 230; 240; 2N0 (Nodes 1-3, N, with N being an arbitrary number - i.e., an arbitrary number of nodes are supported). As illustrated with respect to Node-1 210, each node may include a Network Interface Card (NIC)/ Infrastructure Processing Unit (IPU) 211 for communicating with other nodes / the blockchain, a shift detector 212, an AI (Artificial Intelligence) model manager 213, a seed-aware blockchain manager 214, an action manager 215, a status manager 216 and a reliability manager 217. For example, components 211-217 may be used to implement the apparatus 10 or device 10 shown in connection with Fig. 1a.

The shift detector 212 monitors the exchanged data through the Network Interface Card (NIC)/ Infrastructure Processing Unit (IPU) to detect any atypical changes that could represent a potential DDoS, e.g., through a model obtained from collaborative training among nodes (i.e., federated learning). The shift detector may observe exchanged data through interfaces and may compute statistics based on logical windows (e.g., windows of time, or windows of numbers of requests) to dynamically estimate the recent behavior (e.g., the last 24 hours). Thus, the logical window may be contrasted to new situations that could represent significative deviations to conclude the magnitude of multidimensional deviations. The AI model manager 213 may exchange parameters and status among nodes to iteratively learn with each other based on new scenarios detected by the shift detector. The Status Manager 216 may carry out the statistical analysis and evolution associated with the node status, keeping updated the same information for the neighbor nodes. This information may be contrasted to a Blockchain-based distributed database 200 where the last known details of the seed nodes (and statuses) are available. For example, the only way to update the database may be through Proof-of-work/Proof-of-Stake consensus. The Seed-aware blockchain manager 214 may keep updated the information of node status and seed nodes, participating in the voting to update the blockchain database 200. The action manager 215 may implement the mitigation actions, gossip protocol, and data exchange between nodes when a DDoS is detected based on the provided information by the status and blockchain managers. The action manager 215 may focuses on implementing an immediate contention strategy. The gossip protocol may be articulated with Blockchain technology to consume multiple seeds simultaneously (without central dependency), increasing the reachability scope to contain the DDoS attack, and fostering scalability. The reliability manager 217 may measure the efficacy of the mitigation approach locally (by analyzing the service availability) and keep track of the local component availability to update the level of participation in the blockchain database. It may allow scaling the number of seeds and avoiding central dependency, making it easier to implement a gossip protocol.

Fig. 3 shows a schematic diagram of an operational flow. Fig. 3 shows two blockchain networks 310; 320, each comprising multiple nodes (Devices 1-N 311-31N, 321-32N). Each of the nodes comprises a DDoS Block Chain Agent (DDoS BCA), which may be implemented by the apparatus 10 or device 10 of Fig. 1a, and/or perform the method according to Fig. 1b. The individual blockchain networks may be implemented using EPID groups (Enhanced Privacy Identifier groups, a mechanism proposed by Intel^{®} for attestation of a trusted system). Within the blockchain networks, secure gossip communication is used, and federated learning is performed. The blockchain networks 310; 320 communicate, via networks 300, with a Web3 bridge aggregator and publisher 330.

When the shift detector identifies a DoS attack, the action manager may apply a mitigation plan based on the AI federated model, while the reliability manager may analyze its efficacy. In parallel, the blockchain and status managers may plan a communication strategy based on the known nodes for containing the situation as soon as possible. Once the reliability manager concludes the mitigation efficacy, it may share the information through the action manager using a gossip protocol with the rest of the nodes (e.g., of the same blockchain network). It may iteratively train a federated AI model for smart attack contention. The reliability manager may analyze the efficacy of the mitigation actions before propagating them as a recipe.

The proposed concept allows Infrastructure as a Service (IaaS)-NUCaaS / IPUs to limit DDoS attacks and propagate actions based on a blockchain database where statuses and seeds are updated by consensus (e.g., without central control and keeping change traceability)
Various examples may use a blockchain/Web3 consensus-based shift detector, which may be based on federated learning, to detect DDoS attacks. Layer 2 augmentation may be used for Geo/time-fenced web3 use cases to dynamically agree and set/manage the thresholds for the shift-detector based on workload characteristics. A gossip protocol over blockchain consensus approach may be used towards feed forwarding DDoS attack learnings across the participating Web 3 nodes quickly with self-healing capability (blocking, throttling, reservation, etc.) based on past learning.

More details and aspects of the adaptive mechanism to detect distributed attacks on web3 networks are mentioned in connection with the proposed concept or one or more examples described above or below (e.g., Fig. 1a to 1b). The adaptive mechanism to detect distributed attacks on web3 networks may comprise one or more additional optional features corresponding to one or more aspects of the proposed concept, or one or more examples described above or below.

In the following, some examples of the proposed concept are presented:
An example (e.g., example 1) relates to an apparatus (10) for a node (100) of a blockchain network (1000), the apparatus comprising interface circuitry (12), machine-readable instructions and processor circuitry (14) to execute the machine-readable instructions to compare a traffic pattern of requests associated with one or more smart contracts hosted by the node of the blockchain network with a reference traffic pattern. The processor circuitry is to execute the machine-readable instructions to determine an estimated denial of service of at least one of the one or more smart contracts based on the comparison between the traffic pattern and the reference traffic pattern. The processor circuitry is to execute the machine-readable instructions to determine one or more potential mitigations for the estimated denial of service, e.g., based on a collection of mitigations collectively maintained by the nodes of the blockchain network. The processor circuitry is to execute the machine-readable instructions to apply at least one of the one or more potential mitigations.

Another example (e.g., example 2) relates to a previously described example (e.g., example 1) or to any of the examples described herein, further comprising that the processor circuitry is to execute the machine-readable instructions to determine the one or more potential mitigations based on a collection of mitigations collectively maintained, using a consensus-based administration scheme, by the nodes of the blockchain network.

Another example (e.g., example 3) relates to a previously described example (e.g., one of the examples 1 to 2) or to any of the examples described herein, further comprising that the traffic pattern relates to at least one of incoming requests and outgoing requests.

Another example (e.g., example 4) relates to a previously described example (e.g., one of the examples 1 to 3) or to any of the examples described herein, further comprising that the reference traffic pattern is a reference traffic pattern that is determined locally at the node.

Another example (e.g., example 5) relates to a previously described example (e.g., example 4) or to any of the examples described herein, further comprising that the processor circuitry is to execute the machine-readable instructions to monitor requests associated with the one or more smart contracts, and to determine the reference traffic pattern based on the monitored requests.

Another example (e.g., example 6) relates to a previously described example (e.g., one of the examples 1 to 3) or to any of the examples described herein, further comprising that the reference traffic pattern is a reference traffic pattern that is collectively maintained by the nodes of the blockchain network.

Another example (e.g., example 7) relates to a previously described example (e.g., one of the examples 1 to 6) or to any of the examples described herein, further comprising that the comparison between the traffic pattern and the reference traffic pattern is performed using a traffic pattern evaluation mechanism.

Another example (e.g., example 8) relates to a previously described example (e.g., example 7) or to any of the examples described herein, further comprising that the traffic pattern evaluation mechanism is collectively maintained by the nodes of the blockchain network.

Another example (e.g., example 9) relates to a previously described example (e.g., one of the examples 7 to 8) or to any of the examples described herein, further comprising that the processor circuitry is to execute the machine-readable instructions to adjust the traffic pattern evaluation mechanism over time based on a plurality comparisons between the traffic pattern and the reference traffic pattern at a plurality of points of time.

Another example (e.g., example 10) relates to a previously described example (e.g., example 9) or to any of the examples described herein, further comprising that the processor circuitry is to execute the machine-readable instructions to adjust the traffic pattern evaluation mechanism by training a machine-learning model used by the traffic pattern evaluation mechanism, and to propagate the training of the machine-learning model to one or more further nodes of the blockchain network using federated learning.

Another example (e.g., example 11) relates to a previously described example (e.g., one of the examples 1 to 10) or to any of the examples described herein, further comprising that a selection of the one or more potential mitigations is performed using a mitigation selection mechanism.

Another example (e.g., example 12) relates to a previously described example (e.g., example 11) or to any of the examples described herein, further comprising that the mitigation selection mechanism is collectively maintained by the nodes of the blockchain network.

Another example (e.g., example 13) relates to a previously described example (e.g., one of the examples 11 to 12) or to any of the examples described herein, further comprising that the processor circuitry is to execute the machine-readable instructions to determine an efficacy of the at least one applied mitigation, and to adjust the mitigation selection mechanism over time based on the determined efficacy.

Another example (e.g., example 14) relates to a previously described example (e.g., example 13) or to any of the examples described herein, further comprising that the processor circuitry is to execute the machine-readable instructions to adjust the mitigation selection mechanism by training a machine-learning model used by the mitigation selection mechanism, and to propagate the training of the machine-learning model to one or more further nodes of the blockchain network using federated learning.

Another example (e.g., example 15) relates to a previously described example (e.g., one of the examples 1 to 14) or to any of the examples described herein, further comprising that at least one of a collective maintenance of a collection of mitigations, a collective maintenance of a traffic pattern evaluation mechanism and a collective maintenance of a mitigation selection mechanism is based on a reputation-based mechanism that is based on a reputation of the nodes of the blockchain network.

Another example (e.g., example 16) relates to a previously described example (e.g., one of the examples 1 to 15) or to any of the examples described herein, further comprising that the processor circuitry is to execute the machine-readable instructions to determine an efficacy of the at least one applied mitigation, and to provide information on the efficacy of the at least one potential mitigation to at least one other node of the blockchain network.

Another example (e.g., example 17) relates to a previously described example (e.g., one of the examples 1 to 16) or to any of the examples described herein, further comprising that the processor circuitry is to execute the machine-readable instructions to identify a potential vulnerability associated with the estimated denial of service, and to provide information on the potential vulnerability to at least one other node of the blockchain network.

Another example (e.g., example 18) relates to a previously described example (e.g., one of the examples 1 to 17) or to any of the examples described herein, further comprising that the processor circuitry is to execute the machine-readable instructions to provide information on the estimated denial of service to at least one other node of the blockchain network.

Another example (e.g., example 19) relates to a previously described example (e.g., one of the examples 1 to 18) or to any of the examples described herein, further comprising that the processor circuitry is to execute the machine-readable instructions to share at least one of information on an efficacy of the at least one potential mitigation, information on a potential vulnerability and information on the estimated denial of service to at least one other node of the blockchain network using a gossip protocol.

An example (e.g., example 20) relates to an apparatus (10) for a node (100) of a blockchain network (1000), the apparatus comprising processor circuitry (14) configured to compare a traffic pattern of requests associated with one or more smart contracts hosted by the node of the blockchain network with a reference traffic pattern. The processor circuitry is configured to determine an estimated denial of service of at least one of the one or more smart contracts based on the comparison between the traffic pattern and the reference traffic pattern. The processor circuitry is configured to determine one or more potential mitigations for the estimated denial of service. The processor circuitry is configured to apply at least one of the one or more potential mitigations.

An example (e.g., example 21) relates to a device (10) for a node (100) of a blockchain network (1000), the device comprising means for processing (14) for comparing a traffic pattern of requests associated with one or more smart contracts hosted by the node of the blockchain network with a reference traffic pattern. The means for processing (14) is for determining an estimated denial of service of at least one of the one or more smart contracts based on the comparison between the traffic pattern and the reference traffic pattern. The means for processing is for determining one or more potential mitigations for the estimated denial of service. The means for processing is for applying at least one of the one or more potential mitigations.

An example (e.g., example 22) relates to a method for a node (100) of a blockchain network (1000), the method comprising comparing (130) a traffic pattern of requests associated with one or more smart contracts hosted by the node of the blockchain network with a reference traffic pattern. The method comprises determining (150) an estimated denial of service of at least one of the one or more smart contracts based on the comparison between the traffic pattern and the reference traffic pattern. The method comprises determining (160) one or more potential mitigations for the estimated denial of service . The method comprises applying (170) at least one of the one or more potential mitigations.

Another example (e.g., example 23) relates to a previously described example (e.g., example 22) or to any of the examples described herein, further comprising that the method comprises determining (160) the one or more potential mitigations based on a collection of mitigations collectively maintained, e.g., using a consensus-based administration scheme, by the nodes of the blockchain network.

Another example (e.g., example 24) relates to a previously described example (e.g., one of the examples 22 to 23) or to any of the examples described herein, further comprising that the reference traffic pattern is a reference traffic pattern that is determined locally at the node, wherein the method comprises monitoring (110) requests associated with the one or more smart contracts and determining (120) the reference traffic pattern based on the monitored requests.

Another example (e.g., example 25) relates to a previously described example (e.g., one of the examples 22 to 24) or to any of the examples described herein, further comprising that the comparison between the traffic pattern and the reference traffic pattern is performed using a traffic pattern evaluation mechanism, wherein the method comprises adjusting (140) the traffic pattern evaluation mechanism over time based on a plurality comparisons between the traffic pattern and the reference traffic pattern at a plurality of points of time.

Another example (e.g., example 26) relates to a previously described example (e.g., example 25) or to any of the examples described herein, further comprising that the method comprises adjusting (140) the traffic pattern evaluation mechanism by training (142) a machine-learning model used by the traffic pattern evaluation mechanism, and propagating (144) the training of the machine-learning model to one or more further nodes of the blockchain network using federated learning.

Another example (e.g., example 27) relates to a previously described example (e.g., one of the examples 22 to 26) or to any of the examples described herein, further comprising that a selection of the one or more potential mitigations is performed using a mitigation selection mechanism, wherein the method comprises determining (180) an efficacy of the at least one applied mitigation and adjusting (190) the mitigation selection mechanism over time based on the determined efficacy.

Another example (e.g., example 28) relates to a previously described example (e.g., example 27) or to any of the examples described herein, further comprising that the method comprises adjusting (190) the mitigation selection mechanism by training (192) a machine-learning model used by the mitigation selection mechanism, and propagating (194) the training of the machine-learning model to one or more further nodes of the blockchain network using federated learning.

Another example (e.g., example 29) relates to a previously described example (e.g., one of the examples 22 to 28) or to any of the examples described herein, further comprising that the method comprises determining (180) an efficacy of the at least one applied mitigation and providing (182) information on the efficacy of the at least one potential mitigation to at least one other node of the blockchain network.

Another example (e.g., example 30) relates to a previously described example (e.g., one of the examples 22 to 29) or to any of the examples described herein, further comprising that the method comprises identifying (154) a potential vulnerability associated with the estimated denial of service and providing (156) information on the potential vulnerability to at least one other node of the blockchain network.

Another example (e.g., example 31) relates to a previously described example (e.g., one of the examples 22 to 30) or to any of the examples described herein, further comprising that the method comprises providing (152; 156) information on the estimated denial of service to at least one other node of the blockchain network.

Another example (e.g., example 32) relates to a previously described example (e.g., one of the examples 22 to 31) or to any of the examples described herein, further comprising that the method comprises sharing (152; 156; 182) at least one of information on an efficacy of the at least one potential mitigation, information on a potential vulnerability and information on the estimated denial of service to at least one other node of the blockchain network using a gossip protocol.

An example (e.g., example 33) relates to a computer system (100) comprising the apparatus (10) or device (10) according to one of the examples 1 to 21 (or according to any other example), wherein the computer system (100) is the node of the blockchain network.

An example (e.g., example 34) relates to a computer system (100) configured to perform the method according to one of the examples 22 to 32 (or according to any other example), wherein the computer system (100) is the node of the blockchain network.

An example (e.g., example 35) relates to a non-transitory machine-readable storage medium including program code, when executed, to cause a machine to perform the method of one of the examples 22 to 32 (or according to any other example).

An example (e.g., example 36) relates to a computer program having a program code for performing the method of one of the examples 22 to 32 (or according to any other example) when the computer program is executed on a computer, a processor, or a programmable hardware component.

An example (e.g., example 37) relates to a machine-readable storage including machine readable instructions, when executed, to implement a method or realize an apparatus as claimed in any pending claim or shown in any example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processoror computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or systemon-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (10) for a node (100) of a blockchain network (1000), the apparatus comprising processor circuitry (14) configured to:
compare a traffic pattern of requests associated with one or more smart contracts hosted by the node of the blockchain network with a reference traffic pattern;
determine an estimated denial of service of at least one of the one or more smart contracts based on the comparison between the traffic pattern and the reference traffic pattern;
determine one or more potential mitigations for the estimated denial of service; and
apply at least one of the one or more potential mitigations.

2. The apparatus according to claim 1, wherein the processor circuitry is to execute the machine-readable instructions to determine the one or more potential mitigations based on a collection of mitigations collectively maintained by the nodes of the blockchain network.

3. The apparatus according to one of the claims 1 or 2, wherein the traffic pattern relates to at least one of incoming requests and outgoing requests.

4. The apparatus according to one of the claims 1 to 3, wherein the reference traffic pattern is a reference traffic pattern that is determined locally at the node.

5. The apparatus according to claim 4, wherein the processor circuitry is to execute the machine-readable instructions to monitor requests associated with the one or more smart contracts, and to determine the reference traffic pattern based on the monitored requests.

6. The apparatus according to one of the claims 1 to 3, wherein the reference traffic pattern is a reference traffic pattern that is collectively maintained by the nodes of the blockchain network.

7. The apparatus according to one of the claims 1 to 6, wherein the comparison between the traffic pattern and the reference traffic pattern is performed using a traffic pattern evaluation mechanism.

8. The apparatus according to claim 7, wherein the traffic pattern evaluation mechanism is collectively maintained by the nodes of the blockchain network.

9. The apparatus according to one of the claims 7 or 8, wherein the processor circuitry is to execute the machine-readable instructions to adjust the traffic pattern evaluation mechanism over time based on a plurality comparisons between the traffic pattern and the reference traffic pattern at a plurality of points of time.

10. The apparatus according to claim 9, wherein the processor circuitry is to execute the machine-readable instructions to adjust the traffic pattern evaluation mechanism by training a machine-learning model used by the traffic pattern evaluation mechanism, and to propagate the training of the machine-learning model to one or more further nodes of the blockchain network using federated learning.

11. The apparatus according to one of the claims 1 to 10, wherein a selection of the one or more potential mitigations is performed using a mitigation selection mechanism.

12. The apparatus according to claim 11, wherein the mitigation selection mechanism is collectively maintained by the nodes of the blockchain network.

13. The apparatus according to one of the claims 11 or 12, wherein the processor circuitry is to execute the machine-readable instructions to determine an efficacy of the at least one applied mitigation, and to adjust the mitigation selection mechanism over time based on the determined efficacy.

14. A method for a node (100) of a blockchain network (1000), the method comprising:
comparing (130) a traffic pattern of requests associated with one or more smart contracts hosted by the node of the blockchain network with a reference traffic pattern;
determining (150) an estimated denial of service of at least one of the one or more smart contracts based on the comparison between the traffic pattern and the reference traffic pattern;
determining (160) one or more potential mitigations for the estimated denial of service; and
applying (170) at least one of the one or more potential mitigations.

15. A computer program having a program code for performing the method of claim 14 when the computer program is executed on a computer, a processor, or a programmable hardware component.
